(19) Europäisches Patentamt
European Patent Office
Office européen des brevets

(11) EP 2 703 426 A1

(12) EUROPÄISCHE PATENTANMELDUNG

(43) Veröffentlichungstag:
**05.03.2014 Patentblatt 2014/10**

(51) Int Cl.:
***C08G 64/34*** *(2006.01)*

(21) Anmeldenummer: **12181907.2**

(22) Anmeldetag: **27.08.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Bayer MaterialScience AG
51373 Leverkusen (DE)**

(72) Erfinder:
- **Dr. Müller, Thomas Ernst
52062 Aachen (DE)**
- **Dr. Gürtler, Christoph
50676 Köln (DE)**
- **Dr. Hofmann, Jörg
47800 Krefeld (DE)**
- **Dr. Wohak, Matthias
41541 Dormagen (DE)**
- **Braun, Stefanie
51069 Köln (DE)**
- **Dr. Wolf, Aurel
42489 Wülfrath (DE)**
- **Dr. Peckermann, Ilja
50823 Köln (DE)**

(74) Vertreter: **BIP Patents
c/o Bayer Intellectual Property GmbH
Creative Campus Monheim
Alfred-Nobel-Straße 10
40789 Monheim (DE)**

# (54) Verfahren zur Herstellung von Polyethercarbonatpolyolen

(57) Gegenstand der Erfindung ist ein Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, dadurch gekennzeichnet, dass
(α) ein Suspensionsmittel, das keine H-funktionellen Gruppen enthält, in einem Reaktor vorgelegt wird.
(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird, und
(γ) eine oder mehrere H-funktionelle Startersubstanz(en) während der Reaktion kontinuierlich in den Reaktor zudosiert werden.

EP 2 703 426 A1

**Beschreibung**

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

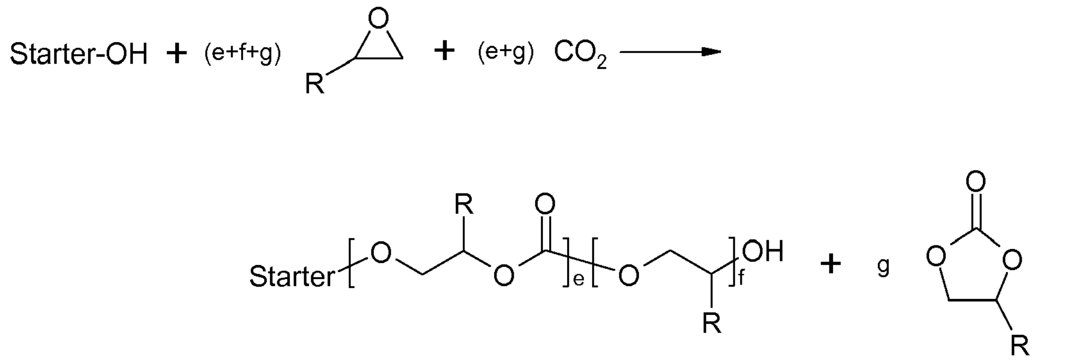

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrück von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden. Dieses Verfahren hat also den Nachteil, dass eine oder mehrere H-funktionelle Startersubstanzen im Reaktor vorgelegt werden müssen.

Es war daher Aufgabe der vorliegenden Erfindung, ein Verfahren zur Herstellung von Polyethercarbonatpolyolen bereitzustellen, bei dem keine H-funktionellen Startersubstanzen im Reaktor vorgelegt werden müssen, wobei das Verfahren zu einem Produkt führt, welches sowohl zu einem hohen Gehalt an eingebautem $CO_2$ im resultierenden Polyethercarbonatpolyol führt und wobei gleichzeitig eine günstige Selektivität (d.h. niedriges Verhältnis von cyclischem Carbonat zu linearem polymer gebundenen Carbonat) erreicht wird.

Überraschend wurde gefunden, dass die erfindungsgemäße Aufgabe gelöst wird durch ein Verfahren zur

Herstellung von Polyethercarbonatpolyolen aus einer oder mehreren H-funktionellen Startersubstanz(en), einem oder mehreren Alkylenoxid(en) und Kohlendioxid in Gegenwart eines DMC-Katalysators, dadurch gekennzeichnet, dass

(α) ein Suspensionsmittel, das keine H-funktionellen Gruppen enthält, in einem Reaktor gegebenenfalls gemeinsam mit DMC-Katalysator vorgelegt wird,
(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird, und
(γ) eine oder mehrere H-funktionelle Startersubstanz(en) während der Reaktion kontinuierlich in den Reaktor zudosiert werden.

Bei dem erfindungsgemäßen Verfahren wird zunächst ein Suspensionsmittel, das keine H-funktionellen Gruppen enthält, im Reaktor vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolaraprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und N-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on.

Zu Schritt (α):

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) ein Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt

In einer bevorzugten Ausführungsform wird in das resultierende Gemisch aus Suspensionsmittel und DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) das Suspensionsmittel oder ein Gemisch aus mindestens zwei Suspensionsmitteln vorgelegt und

(α-II) die Temperatur des Suspensionsmittels oder des Gemisches aus mindestens zwei Suspensionsmittel auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel oder zum Gemisch aus mindestens zwei Suspensionsmitteln in Schritt (α-I) oder unmittelbar anschließend in Schritt (α-II) zugesetzt werden, und wobei das Suspensionsmittel keine H-funktionellen Gruppen enthält.

Zu Schritt (β):

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxidverbindung bei Temperaturen von 90 bis 150°C zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von $CO_2$, zum DMC-Katalysator gegeben werden und dann jeweils die Zugabe der Alkylenoxidverbindung unterbrochen werden. Im diesem Fall umfasst der Verfahrensschritt der Aktivierung die Zeitspanne von der Zugabe der ersten Teilmenge an Alkylenoxidverbindung, gegebenenfalls in Gegenwart von $CO_2$, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der H-funktionellen Starterverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge Alkylenoxidverbindung die Zugabe der Alkylenoxidverbindung bis zum Auftreten der Wärmeentwicklung unterbrochen und erst dann die nächste Teilmenge an Alkylenoxidverbindung zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und

(β2) in einer zweiten Aktivierungsstufe die Zugabe einer zweiten Teilmenge von Alkylenoxid unter Kohlendioxid-Atmosphäre erfolgt.

Zu Schritt (y):

Die Dosierung einer oder mehrerer H-funktioneller Startersubstanz(en), eines oder mehrerer Alkylenoxid(e) und gegebenenfalls auch des Kohlendioxids kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder der einen oder mehreren H-funktionellen Startersubstanz(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der einen oder mehreren H-funktionellen Startersubstanz(en) zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Starterverbindung und des DMC-Katalysators kann über separate oder gemeinsame Dosierstellen erfolgen. In einer bevorzugten Ausführungsform werden das Alkylenoxid und die H-funktionelle Starterverbindung über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierte Katalysator-Suspensionsmittel-Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner

variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren wobei in Schritt (γ) eine oder mehrere H-funktionelle Startersubstanz(en), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an einer oder mehreren H-funktionelle Startersubstanz(en), einem oder mehreren Alkylenoxid(en) und Kohlendioxid zudosiert zum Initiieren der Copolymerisation, und

(γ2) während des Fortschreitens der Copolymerisation jeweils die verbleibende Menge an DMC-Katalysator, einer oder mehreren Startersubstanz(en) und Alkylenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Starterverbindung zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymersation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyethercarbonatpolyolprodukts verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer Startersubstanz oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren Alkylenoxide (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropylethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

Als geeignete H-funktionelle Startersubstanz ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an ε-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem

fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder tert-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (II),

$$M(X)_n \qquad (II)$$

wobei
M ausgewählt ist aus den Metallkationen $Zn^{2+}$, $Fe^{2+}$, $Ni^{2+}$, $Mn^{2+}$, $Co^{2+}$, $Sr^{2+}$, $So^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (III),

$$M_r(X)_3 \qquad (III)$$

wobei
M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (IV),

$$M(X)_s \qquad (IV)$$

wobei
M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;

s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,
oder geeignete Metallsalze besitzen die allgemeine Formel (V),

$$M(X)_t \qquad (V)$$

wobei
M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (VI)

$$(Y)_a\ M'(CN)_b\ (A)_c \qquad (VI)$$

wobei
M' ausgewählt ist aus einem oder mehreren Metallkationen der Gruppe bestehend aus Fe(II), Fe(III), Co(II), Co(III), Cr (II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),
Y ausgewählt ist aus einem oder mehreren Metallkationen der Gruppe bestehend aus Alkalimetall (d.h. $Li^+$, $Na^+$, $K^+$, $Rb^+$)und Erdalkalimetall (d.h. $Be^{2+}$, $Mg^{2+}$, $Ca^{2+}$, $Sr^{2+}$, $Ba^{2+}$),
A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und
a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (VII)

$$M_x[M'_{x'}(CN)_y]_z \qquad (VII)$$

worin M wie in Formel (II) bis (V) und
M' wie in Formel (VI) definiert ist, und
x, x', y und z sind ganzzahlig und so gewählt, dass die Elektronenneutralität der Doppelmetallcyanidverbindung gegeben ist.

Vorzugsweise ist
x=3, x'=1, y=6 und z=2,
M = Zn(II), Fe(II), Co(II) oder Ni(II) und
M' = Co(III), Fe(III), Cr(III) oder Ir(III).

Beispiele geeigneter Doppelmetallcyanidverbindungen a) sind Zinkhexacyanocobaltat(III), Zinkhexacyanoiridat (III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie e z.B . **Ethylenglykol**-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha,\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen

Gehalt an Nebenprodukten auf und können problemlos verarbeitet werden, insbesondere durch Umsetzung mit Di- und/ oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt, dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

## Beispiele

Einsatzstoffe:

PET-1: trifunktionelles Poly(oxypropylen)polyol mit einer OH-Zahl von 237 mg KOH/g.

Als DMC-Katalysator wurde bei allen Beispielen DMC-Katalysator hergestellt gemäß Beispiel 6 in WO 01/80994 A1 eingesetzt.

Die OH-Zahl (Hydroxylzahl) wurde gemäß DIN 53240-2 bestimmt.

Das Zahlenmittel $M_n$ und das Gewichtsmittel $M_w$ des Molekulargewichts sowie der Polydispersitätsindex ($M_w/M_n$) der Produkte wurde mittels Gelpermeationschromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei wurden Polystyrolproben bekannter Molmasse zur Kalibrierung verwendet.

Die Bestimmung der Viskosität erfolgte auf einem Physica MCR 501 Rheometer der Fa. Anton Paar. Es wurde eine Kegel-Platte-Konfiguration mit einem Abstand von 1 mm gewählt (Messsystem DCP25). Das Polyethercarbonatpolyol (0,1 g) wurde auf der Rheometerplatte aufgebracht und bei 25°C einer Scherung von 0,01 bis 1000 l/s unterworfen und für 10 min alle 10 s die Viskosität gemessen. Angegeben ist die über alle Messpunkte gemittelte Viskosität.

Der Anteil an eingebautem $CO_2$ im resultierenden Polyethercarbonatpolyol sowie das Verhältnis von Propylencarbonat zu Polyethercarbonatpolyol wurden mittels $^1$H-NMR (Firma Bruker, DPX 400, 400 MHz; Pulsprogramm zg30, Wartezeit d1: 10s, 64 Scans) bestimmt. Die Probe wurde jeweils in deuteriertem Chloroform gelöst. Die relevanten Resonanzen im $^1$H-NMR (bezogen auf TMS = 0 ppm) sind wie folgt:

cyclisches Carbonat (welches als Nebenprodukt gebildet wurde) Resonanz bei 4,5 ppm, Carbonat, resultierend aus im Polyethercarbonatpolyol eingebautem Kohlendioxid (Resonanzen bei 5,1 bis 4,8 ppm), nicht abreagiertes PO mit Resonanz bei 2,4 ppm, Polyetherpolyol (d.h. ohne eingebautem Kohlendioxid) mit Resonanzen bei 1,2 bis 1,0 ppm.

Der Molenanteil des im Polymer eingebauten Carbonats in der Reaktionsmischung wird nach Formel (X) wie folgt berechnet, wobei folgende Abkürzungen verwendet werden:

F(4,5) = Fläche der Resonanz bei 4,5 ppm für cyclisches Carbonat (entspricht einem H Atom)
F(5,1-4,8) = Fläche der Resonanz bei 5,1-4,8 ppm für Polyethercarbonatpolyol und einem H-Atom für cyclisches Carbonat.
F(2,4) = Fläche der Resonanz bei 2,4 ppm für freies, nicht abreagiertes PO
F(1,2-1,0) = Fläche der Resonanz bei 1,2-1,0 ppm für Polyetherpolyol

Unter Berücksichtigung der relativen Intensitäten wurde gemäß der folgenden Formel (VIII) für das polymer gebundene Carbonat ("lineares Carbonat" LC) in der Reaktionsmischung in mol% umgerechnet:

$$LC = \frac{F(5,1-4,8) - F(4,5)}{F(5,1-4,8) + F(2,4) + 0,33 * F(1,2-1,0)} * 100 \qquad \text{(VIII)}$$

Der Gewichtsanteil (in Gew.-%) polymer-gebundenen Carbonats (LC’) in der Reaktionsmischung wurde nach Formel (IX) berechnet,

$$LC' = \frac{\left[F(5{,}1-4{,}8)-F(4{,}5)\right]*102}{N}*100\% \qquad \text{(IX)}$$

wobei sich der Wert für N ("Nenner" N) nach Formel (X) berechnet:

$$N = \left[F(5{,}1-4{,}8)-F(4{,}5)\right]*102 + F(4{,}5)*102 + F(2{,}4)*58 + 0{,}33*F(1{,}2-1{,}0)*58 \qquad \text{(X)}$$

Der Faktor 102 resultiert aus der Summe der Molmassen von $CO_2$ (Molmasse 44 g/mol) und der von Propylenoxid (Molmasse 58 g/mol), der Faktor 58 resultiert aus der Molmasse von Propylenoxid.

Der Gewichtsanteil (in Gew.-%) an cyclischem Carbonat (CC') in der Reaktionsmischung wurde nach Formel (XI) berechnet,

$$CC' = \frac{F(4{,}5)*102}{N}*100\% \qquad \text{(XI)}$$

wobei sich der Wert für N nach Formel (X) berechnet.

Um aus den Werten der Zusammensetzung der Reaktionsmischung die Zusammensetzung bezogen auf den Polymer-Anteil (bestehend aus Polyether, welcher aus Propylenoxid während der unter $CO_2$-freie Bedingungen stattfindenden Aktivierungsschritten aufgebaut wurde, und Polyethercarbonatpolyol, aufgebaut aus Starter, Propylenoxid und Kohlendioxid während den in Gegenwart von $CO_2$ stattfindenden Aktivierungsschritten und während der Copolymerisation) zu berechnen, wurden die Nicht-Polymer-Bestandteile der Reaktionsmischung (d.h. cyclisches Propylencarbonat sowie ggf. vorhandenes, nicht umgesetztes Propylenoxid) rechnerisch eliminiert. Der Gewichtsanteil der Carbonat-Wiederholungseinheiten im Polyethercarbonatpolyol wurde in einen Gewichtsanteil Kohlendioxid mittels des Faktors F=44/(44+58) umgerechnet. Die Angabe des $CO_2$-Gehalts im Polyethercarbonatpolyol ("eingebautes $CO_2$"; siehe nachfolgende Beispiele und Tabelle 1) ist normiert auf das Polyethercarbonatpolyol-Molekül, das bei der Copolymerisation und den Aktivierungsschritten entstanden ist.

Die Menge an gebildeten cyclischen Propylencarbonat wird über die Bilanzierung der in der Reaktionsmischung vorhandenen Gesamtmenge an cyclischem Propylencarbonat und der als Vorlage eingesetzten Menge an Propylencarbonat bestimmt. Die Gesamtmenge an cyclischen Propylencarbonat ergibt sich aus der quantitativen Abtrennung des cyclischen Propylencarbonats aus der Reaktionsmischung mittels Dünnschichtverdampfung (0,1 mbar, 120 °C). Die gebildete Menge an Propylencarbonat wird dann über Rückrechnung mit der als Vorlage eingesetzten Propylencarbonatmenge bestimmt.

**Beispiel 1: Herstellung von Polyethercarbonatpolyol mit Vorlage von cPC als Suspensionsmittel und kontinuierlicher Dosierung von Glycerin als H-funktioneller Startersubstanz**

Schritt $\alpha$:

134 mg getrockneter DMC-Katalysator, der nicht aktiviert ist, wurden in 97,04 g 4-Methyl-2-oxo-1,3-dioxolan (im Folgenden auch als cyclisches Propylencarbonat oder cPC bezeichnet) suspendiert und die Suspension anschließend in einen 1L Druckreaktor mit Gasdosierungseinrichtung gefüllt. Die Suspension wurde dann auf 130 °C aufgeheizt und über 30 min wurde mit 26 - 30 L/h Stickstoff eingeleitet und gleichzeitig ein reduzierter Druck von 75-100 mbar angelegt.

Schritt $\beta$:

In dem Reaktor wurden bei 130 °C, 1250 U/min und bei einem Vordruck von 100 mbar, der mit Stickstoff eingestellt wurde, eine Menge von 10 g Propylenoxid (PO) auf einmal zugegeben. Das Anspringen der Reaktion machte sich durch eine Temperaturspitze ("Hotspot") und durch einen Druckabfall auf den Ausgangsdruck bemerkbar. Nach dem ersten Druckabfall wurde der Reaktor mit p1 = 49 bar $CO_2$ beaufschlagt und anschließend wurden zur Aktivierung weitere 10 g PO auf einmal zugegeben. Nach einer Wartezeit kam es erneut zu einer Temperaturspitze und der Gesamtdruck im Reaktor zeigte eine Druckabnahme.

Schritt γ:

Nach der erfolgten Aktivierung wurden Propylenoxid (514 g) mit ca. 2,2 g/min und 18 g des niedermolekularen Starters Glycerin (versetzt mit 90 ppm 85%-iger $H_3PO_4$) mit 0,1 g/min simultan in den Reaktor eindosiert. Gleichzeitig wurde die Reaktionstemperatur von 130 °C in Schritten von 5°C pro fünf Minuten auf 105 °C gesenkt. Der Fortschritt der Reaktion wurde an dem $CO_2$-Verbrauch beobachtet, wobei durch kontinuierliche geregelte Nachdosierung der Druck bei dem oben angegebenen Druck p1 im Reaktor konstant gehalten wurde. Nach beendeter PO-Zugabe wurde bei 105 °C und Reaktionsdruck bis zum Versiegen des $CO_2$-Verbrauchs nachgerührt (1250 U/min). Das cyclische Propylencarbonat wurde aus der Reaktionsmischung mittels Dünnschichtverdampfung (0,1 mbar, 120 °C) abgetrennt. Der im Polyethercarbonatpolyol eingebaute $CO_2$-Anteil, das Verhältnis an cyclischem zu linearem Carbonat, der Polydispersionsindex (PDI) und die OH-Zahl sind in der Tabelle 1 angegeben.

**Beispiel 2: Herstellung von Polyethercarbonatpolyol mit Vorlage von cPC als Suspensionsmittel und kontinuierlicher Dosierung von Glycerin als H-funktioneller Startersubstanz**

Entsprechend des Beispiels 1 wurde die Herstellung des Polyethercarbonatpolyols durchgeführt, wobei in Schritt α 30,38 g cPC als Suspensionsmittel eingesetzt wurden und wobei ein Druck p1 von 44 bar eingestellt wurde. Die Ergebnisse sind in Tabelle 1 angegeben.

**Beispiel 3: Herstellung von Polyethercarbonatpolyol mit Vorlage von cPC als Suspensionsmittel und kontinuierlicher Dosierung von Glycerin als H-funktioneller Startersubstanz**

Entsprechend des Beispiels 1 wurde die Herstellung des Polyethercarbonatpolyols durchgeführt, wobei in Schritt α 75,9 g cPC als Suspensionsmittel eingesetzt wurden und wobei ein Druck p1 von 46 bar eingestellt wurde. Die Ergebnisse sind in Tabelle 1 angegeben.

**Beispiel 4: Herstellung von Polyethercarbonatpolyol mit Vorlage von Toluol als Suspensionsmittel und kontinuierlicher Dosierung von Glycerin als H-funktioneller Startersubstanz**

Entsprechend des Beispiels 1 wurde die Herstellung des Polyethercarbonatpolyols durchgeführt, wobei in Schritt α 30,2 g Toluol als Suspensionsmittel eingesetzt wurden und wobei ein Druck p1 von 48 bar eingestellt wurde. Dabei wurde abweichend von Beispiel 1 Schritt α wie folgt ausgeführt:

> 134 mg getrockneter DMC-Katalysator, der nicht aktiviert ist, wurden in 30,2 g Toluol suspendiert und die Suspension anschließend in einen 1 L Druckreaktor mit Gasdosierungseinrichtung gefüllt, die Suspension wurde dann auf 130 °C aufgeheizt und dreimal mit 5 bar (absolut) Stickstoff beaufschlagt und jeweils anschließend der Überdruck auf ca. 1 bar (absolut) reduziert Die Ergebnisse sind in Tabelle 1 angegeben.

**Beispiel 5 (Vergleich): Herstellung von Polyethercarbonatpolyol mit Vorlage von Polyethercarbonatpolyol als Suspensionsmittel und kontinuierlicher Dosierung von Glycerin als H-funktioneller Startersubstanz**

Entsprechend des Beispiels 1 wurde die Herstellung des Polyethercarbonatpolyols durchgeführt, wobei 30,3 g Polyethercarbonatpolyol, welches zuvor gemäß Beispiel 1 hergestellt wurde, als Suspensionsmittel für den DMC-Katalysator vorgelegt wurden.. Die Ergebnisse sind in Tabelle 1 angegeben.

**Beispiel 6 (Vergleich): Herstellung von Polyethercarbonatpolyol mit Vorlage von Polyetherpolyol als Suspensionsmittel und kontinuierlicher Dosierung von Glycerin als H-funktioneller Startersubstanz**

Entsprechend des Beispiels 1 wurde die Herstellung des Polyethercarbonatpolyols durchgeführt, wobei in Schritt α an Stelle eines Suspensionsmittels 54,32 g Polyetherpolyol PET-1 eingesetzt wurde. Dabei wurde abweichend von Beispiel 1 Schritt α wie folgt ausgeführt:

> 159 mg getrockneter DMC-Katalysator, der nicht aktiviert ist, wurden in 54,32 g PET-1 suspendiert und die Suspension anschließend in einen 1L Druckreaktor mit Gasdosierungseinrichtung gefüllt, die Suspension wurde dann auf 130 °C aufgeheizt und dreimal mit 5 bar (absolut) Stickstoff beaufschlagt und jeweils anschließend der Überdruck auf ca. 1 bar (absolut) reduziert.

Abweichend von Beispiel 1 wurde Schritt γ wie folgt ausgeführt:

Nach der erfolgten Aktivierung wurden 95 g PO mit der Dosierrate 1,8 g/min zugegeben. Anschließend wurden 567 g PO mit einer Dosierrate von 2,7 g/min und 20 g des niedermolekularen Starters Glycerin (versetzt mit 90 ppm 85%-iger $H_3PO_4$) mit einer Dosierrate von 0,1 g/min simultan in den Reaktor eindosiert und weiter wie bei Beispiel 1 angeben verfahren. Die Ergebnisse sind in Tabelle 1 angegeben.

Aus der Tabelle 1 ist ersichtlich, dass bei Herstellung von Polyethercarbonatpolyolen mit Vorlage von cPC als Suspensionsmittel im Sinne der vorliegenden Erfindung, deutlich bessere Selektivitäten bei gleichzeitig hohen $CO_2$-Einbau von über 15 Gew-% erhalten werden. Darüber hinaus ist der Polydispersitätsindex bei Einsatz von cPC als Suspensionsmittel deutlich reduziert.

**Tabelle 1:** Resultate der Polyethercarbonatpolyol-Herstellung

| Beispiel | Vorgelegtes Suspensionsmittel | cyclisches / lineares Carbonat | $CO_2$-Einbau [Gew.-%] | PDI [$M_w/M_n$] | OH-Zahl [mg KOH / g] |
|---|---|---|---|---|---|
| **1** | cPC | 0,08 | 17,47 | 1,10 | 53,2 |
| **2** | cPC | 0,04 | 15,93 | 1,12 | 54,3 |
| **3** | cPC | 0,05 | 16,85 | 1,11 | 52,5 |
| **4** | Toluol | 0,14 | 18,03 | 1,46 | 53,3 |
| **5*** | Produkt aus Beispiel 1 | 0,15 | 18,42 | 1,21 | 54,7 |
| **6*** | PET-1 | 0,16 | 15,91 | 1,29 | 54,0 |
| * = Vergleichsbeispiel | | | | | |

**Beispiele zur kontinuierlichen Herstellung von Polyethercarbonatpolyolen**

Die folgenden Beispiele (Beispiele 7, 8) zur kontinuierlichen Herstellung von Polyethercarbonatpolyolen wurden in einer Kaskade von drei hintereinandergeschalteten, Druckreaktoren (Reaktor R1 (300 ml Volumen), Reaktor R2 (300 ml Volumen) und Reaktor R3 (1700 ml Volumen)) durchgeführt.

Für die Aufnahme der Propylenoxid-Konzentration im Reaktor R2 wurde ein Bruker MATRIX-MF Spektrometer ausgestattet mit 3,17 mm ATR-IR Faseroptik-Sonden verwendet. Die ATR-IR Faseroptik-Sonden (90° Diamant-Prisma mit 1 x 2mm Grundfläche und 1 mm Höhe als ATR Element, 2 x 45° Reflektion des IR Strahls, IR Strahl über Lichtleitfaser eingekoppelt) wurden so in den Reaktor eingebaut, dass der am Ende der 3,17 mm ATR Faseroptik-Sonde befindliche Diamant vollständig in die Reaktionsmischung eintauchte. IR Spektren (Mittelwert von 100 Scans) wurden alle 60 Sekunden im Bereich 4000-650 $cm^{-1}$ mit einer Auflösung von 4 $cm^{-1}$ aufgenommen. Die Propylenoxid-Konzentration wurde über Aufnahme der charakteristischen Bande für Propylenoxid bei 830 $cm^{-1}$ verfolgt. Eine Abnahme der Intensität der Bande bei 830 $cm^{-1}$ auf 5% des Maximalwertes wurde als vollständiger Umsatz von Propylenoxid gewertet.

**Beispiel 7: Kontinuierliche Herstellung von Polyethercarbonatpolyol mit Glycerin als H-funktioneller Startersubstanz**

Herstellung einer Suspension aus DMC-Katalysator und Glycerin:

In einem 300 ml Druckreaktor (Reaktor R1) ausgestattet mit Impellerrührer wurde eine Mischung aus DMC-Katalysator (1,21 g) und Glycerin (171,41 g) vorgelegt. Der Reaktor wurde geschlossen und die Dispersion aus DMC-Katalysator und Glycerin in Reaktor R1 bei Raumtemperatur (25°C) über Nacht mit 100 U/min gerührt. Der Druck in Reaktor R1 wurde mit Argon, das in die Gasphase eingeleitet wird, auf 60 bar eingestellt und während der nachfolgenden Schritte durch Nachdosieren bei 60 bar gehalten.

Schritt $\alpha$:

In einem 300 ml Druckreaktor (Reaktor R2) ausgestattet mit Impellerrührer und Strömungsleitblech wurde eine Mischung aus DMC-Katalysator (0,0291 g) und cyclischem Propylencarbonat (100,18 g) vorgelegt. Der Reaktor R2 wurde geschlossen, der Druck im Reaktor R2 auf 50 mbar reduziert und der Reaktor auf 130°C aufgeheizt. Anschließend wurde ein leichter Ar-Strom am Boden des Reaktors in die Reaktionsmischung eingestellt. Durch Regeln des leichten Ar-Stroms und gleichzeitiges Entfernen des Gases mit einer Pumpe wurde der Druck im Reaktor R2 auf 50 mbar

eingestellt und die Mischung für 30 min bei 130°C unter reduziertem Druck (50 mbar) und leichtem Ar-Strom gerührt (500 U/min).

Schritt β:

Es wurden 10 g Propylenoxid mit Hilfe einer Massenflussreglers (200 g/h) in den Reaktor R2 dosiert. Die Abnahme der Konzentration des Propylenoxids wurde über IR Spektroskopie verfolgt. Die Reaktionsmischung wurde bis zum vollständigen Umsatz des Propylenoxids *(ca.* 5 min) gerührt (500 U/min). Anschließend wurden ein weiteres mal 10 g Propylenoxid mit Hilfe der HPLC-Pumpe (200 g/h) in den Reaktor R2 dosiert und die Reaktionsmischung bis zum vollständigen Umsatz des Propylenoxids *(ca.* 5 min) gerührt (500 U/min). Es wurde eine kurzzeitig erhöhte Wärmeentwicklung im Reaktor R2 nach Zugabe des Propylenoxids beobachtet.

Schritt γ:

Anschließend wurde die Temperatur der Mischung in Reaktor R2 auf 105°C abgesenkt. Über einen Massenflussregler wurden kontinuierlich 68 g/h Propylenoxid in den Reaktor R2 dosiert. Gleichzeitig wurde die Suspension aus DMC Katalysator und Glycerin aus Reaktor R1 kontinuierlich mit einer Rate von 2,9 g/h in den Reaktor R2 eingeleitet. Weiterhin wurde in die Gasphase von Reaktor R2 kontinuierlich $CO_2$ mit einem Fluss von 30 g/h eingeleitet und der Druck langsam (mit 0,4 bar $min^{-1}$) auf 50 bar erhöht. Sobald der Überlauf von Reaktor R2 (bei 175 ml Flüssigkeitsvolumen) erreicht wurde, wurde ein Ventil am Auslass von Reaktor R2 geöffnet und der Auslassstrom über einen weiteren Druckbehälter (Reaktor R3, ausgestattet mit einem Spiralrührer) und einen Vordruckregler abgeleitet. Der Druck in den Reaktoren 2 und 3 wurde über den Vordruckregler auf 50 bar geregelt. Das Produktgemisch wurde in Reaktor R3 bei 105°C unter Druck aufgefangen und bei 300 U/min gerührt. Nach 17 Stunden Betriebsdauer wurde über ein Ventil die flüssige Phase aus Reaktor R3 abgelassen. Nach weiteren 28,5 Stunden Betriebsdauer wurde über das Ventil des Reaktors 3 das erhaltene Reaktionsprodukt entnommen und vor der Analyse von leicht flüchtigen Bestandteilen gereinigt. Hierzu wurde die Reaktionsmischung mit Dichlormethan (20 ml) verdünnt und die Lösung durch einen Fallfilmverdampfer geleitet. Die Lösung (0,1 kg in 1 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von <1 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Charakterisierung des Produkts aus Reaktor 3 nach Fallfilmverdampfer:

Verhältnis cyclisches / lineares Carbonat: 0,08
Gewichtsanteil Kohlendioxid im Polyethercarbonatpolyol: 20,21 Gew.-%.
Molekulargewicht $M_n$ = 2908 g/mol, $M_w$ = 3675 g/mol, Polydispersitätsindex = 1,26.
OH Zahl = 60,5 mg KOH/g.
Viskosität (25°C) = 36,0 Pa s.

**Beispiel 8: Kontinuierliche Herstellung von Polyethercarbonatpolyol mit Dipropylenglykol als H-funktioneller Startersubstanz**

Herstellung einer Suspension aus DMC-Katalysator und Dipropylenglykol:

In einem 300 ml Druckreaktor (Reaktor R1) ausgestattet mit Impellerrührer wurde eine Mischung aus DMC-Katalysator (0,5972 g) und Dipropylenglykol (200,10 g) vorgelegt. Der Reaktor wurde geschlossen und die Dispersion aus DMC-Katalysator und Dipropylenglykol in Reaktor R1 bei Raumtemperatur (25°C) über Nacht mit 100 U/min gerührt. Der Druck in Reaktor R1 wurde mit Argon, das in die Gasphase eingeleitet wird, auf 60 bar eingestellt und während der nachfolgenden Schritte durch Nachdosieren bei 60 bar gehalten.

Schritt α:

In einem 300 ml Druckreaktor (Reaktor R2) ausgestattet mit Impellerrührer und Strömungsleitblech wurde eine Mischung aus DMC-Katalysator (0,0252 g) und cyclischem Propylencarbonat (99,98 g) vorgelegt. Der Reaktor R2 wurde geschlossen, der Druck im Reaktor R2 auf 50 mbar reduziert und der Reaktor R2 auf 130°C aufgeheizt. Anschließend wurde ein leichter Ar-Strom am Boden des Reaktors in die Reaktionsmischung eingestellt. Durch Regeln des leichten Ar-Stroms und gleichzeitiges Entfernen des Gases mit einer Pumpe wurde der Druck im Reaktor auf 50 mbar eingestellt

und die Mischung für 30 min bei 130°C unter reduziertem Druck (50 mbar) und leichtem Ar-Strom gerührt (500 U/min).

Schritt β:

Es wurden 10 g Propylenoxid mit Hilfe einer Massenflussreglers (200 g/h) in den Reaktor R2 dosiert. Die Abnahme der Konzentration des Propylenoxids wurde über IR Spektroskopie verfolgt. Die Reaktionsmischung wurde bis zum vollständigen Umsatz des Propylenoxids *(ca.* 5 min) gerührt (500 U/min). Anschließend wurden ein weiteres mal 10 g Propylenoxid mit Hilfe der HPLC-Pumpe (200 g/h) in den Reaktor R2dosiert und die Reaktionsmischung bis zum vollständigen Umsatz des Propylenoxids *(ca.* 5 min) gerührt (500 U/min). Es wurde eine kurzzeitig erhöhte Wärmeentwicklung im Reaktor R2 nach Zugabe des Propylenoxids beobachtet.

Schritt γ:

Anschließend wurde die Temperatur der Mischung in Reaktor R2 auf 105°C abgesenkt. Über einen Massenflussregler wurden kontinuierlich 70 g/h Propylenoxid in den Reaktor R2 dosiert. Gleichzeitig wurde die Suspension aus DMC Katalysator und Dipropylenglykol aus Reaktor R1 kontinuierlich mit einer Rate von 6,0 g/h in den Reaktor R2 eingeleitet. Weiterhin wurde in die Gasphase von Reaktor R2 kontinuierlich $CO_2$ mit einem Fluss von 30 g/h eingeleitet und der Druck langsam (mit 0,4 bar $min^{-1}$) auf 50 bar erhöht. Sobald der Überlauf von Reaktor R2 (bei 175 ml Flüssigkeitsvolumen) erreicht wurde, wurde ein Ventil am Auslass von Reaktor R2 geöffnet und der Auslassstrom über einen weiteren Druckbehälter (Reaktor R3, ausgestattet mit einem Spiralrührer) und einen Vordruckregler abgeleitet. Der Druck in den Reaktoren 2 und 3 wurde über den Vordruckregler auf 50 bar geregelt. Das Produktgemisch wurde in Reaktor R3 bei 105°C unter Druck aufgefangen und bei 300 U/min gerührt. Nach 18 Stunden Betriebsdauer wurde über ein Ventil die flüssige Phase aus Reaktor R3 abgelassen. Nach weiteren 30,5 Stunden Betriebsdauer wurde über das Ventil des Reaktors 3 das erhaltene Reaktionsprodukt entnommen und vor der Analyse von leicht flüchtigen Bestandteilen gereinigt. Hierzu wurde die Reaktionsmischung mit Dichlormethan (20 ml) verdünnt und die Lösung durch einen Fallfilmverdampfer geleitet. Die Lösung (0,1 kg in 1 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von <1 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Charakterisierung des Produkts aus Reaktor 3 nach Fallfilmverdampfer:

Verhältnis cyclisches / lineares Carbonat: 0,16
Gewichtsanteil Kohlendioxid im Polyethercarbonatpolyol: 17,30 Gew.-%.
Molekulargewicht $M_n$ = 2846 g/mol, $M_w$ = 3288 g/mol, Polydispersitätsindex = 1,16.
OH Zahl = 60,4 mg KOH/g.
Viskosität (25°C) = 4,1 Pa s.

## Patentansprüche

1. Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, **dadurch gekennzeichnet, dass**

   (α) ein Suspensionsmittel, das keine H-funktionellen Gruppen enthält, in einem Reaktor vorgelegt wird und
   (γ) eine oder mehrere H-funktionelle Startersubstanz(en) während der Reaktion kontinuierlich in den Reaktor zudosiert werden.

2. Verfahren gemäß Anspruch 1, wobei in Schritt (α) ein Suspensionsmittel, das keine H-funktionellen Gruppen enthält, im Reaktor vorgelegt wird, und dabei keine H-funktionelle Startersubstanz im Reaktor vorgelegt wird.

3. Verfahren gemäß Anspruch 1, wobei in Schritt (α) ein Suspensionsmittel, das keine H-funktionellen Gruppen enthält, und zusätzlich eine Teilmenge der H-funktionellen Startersubstanz(en) im Reaktor vorgelegt werden.

4. Verfahren gemäß einem der Ansprüche 1 bis 3, wobei in Schritt (α) ein Suspensionsmittel, das keine H-funktionellen Gruppen enthält, gemeinsam mit DMC-Katalysator im Reaktor vorgelegt wird.

**5.** Verfahren gemäß Anspruch 4, wobei anschließend an Schritt (α)

(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird.

**6.** Verfahren gemäß Anspruch 5, wobei Schritt (β) unter Inertgasatmosphäre, unter einer Atmosphäre aus Inertgas-Kohlendioxid-Gemisch oder unter einer Kohlendioxid-Atmosphäre durchgeführt wird.

**7.** Verfahren gemäß Anspruch 5, wobei in Schritt (β)

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

**8.** Verfahren gemäß einem der Ansprüche 1 bis 7, wobei in Schritt (γ) eine oder mehrere H-funktionelle Startersubstanz (en), ein oder mehrere Alkylenoxid(e) kontinuierlich dosiert werden in Gegenwart von Kohlendioxid ("Copolymerisation").

**9.** Verfahren gemäß einem der Ansprüche 1 bis 8, wobei in Schritt (γ) die Dosierung der einen oder mehreren H-funktionellen Startersubstanz(en) zeitlich vor der Zugabe des Alkylenoxids beendet wird.

**10.** Verfahren gemäß Anspruch 8 oder 9, wobei in Schritt (γ) DMC-Katalysator kontinuierlich in den Reaktor dosiert wird und das resultierende Reaktionsgemisch kontinuierlich aus dem Reaktor entfernt wird.

**11.** Verfahren gemäß Anspruch 10, wobei der DMC-Katalysator in H-funktioneller Starterverbindung suspendiert kontinuierlich zugegeben wird.

**12.** Verfahren gemäß Anspruch 10 oder 11, wobei

(δ) das in Schritt (γ) kontinuierlich entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

**13.** Verfahren gemäß einem der Ansprüche 1 bis 12, wobei in Schritt (α) als Suspensionsmittel mindestens eine Verbindung ausgewählt aus der Gruppe bestehend aus 4-Methyl-2-oxo-1,3-dioxolan, 1,3-Dioxolan-2-on, Aceton, Methylethylketon, Acetonitril, Nitromethan, Dimethylsulfoxid, Sulfolan, Dimethylformamid, Dimethylacetamid, N-Methylpyrrolidon, Dioxan, Diethylether, Methyl-tert-Butylether, Tetrahydrofuran, Essigsäureethylester, Essigsäurebutylester, Pentan, n-Hexan, Benzol, Toluol, Xylol, Ethylbenzol, Chloroform, Chlorbenzol, Dichlorbenzol und Tetrachlorkohlenstoff eingesetzt wird.

**14.** Verfahren gemäß einem der Ansprüche 1 bis 12, wobei in Schritt (α) als Suspensionsmittel 4-Methyl-2-oxo-1,3-dioxolan und 1,3-Dioxolan-2-on oder eine Mischung aus 4-Methyl-2-oxo-1,3-dioxolan und 1,3-Dioxolan-2-on eingesetzt wird.

**15.** Verfahren gemäß einem der Ansprüche 1 bis 14, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Europäisches Patentamt
European Patent Office
Office européen des brevets

# EUROPÄISCHER RECHERCHENBERICHT

Nummer der Anmeldung
EP 12 18 1907

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2011/230580 A1 (ALLEN SCOTT D [US] ET AL) 22. September 2011 (2011-09-22)<br>* Beispiele 7-9 *<br>* Anspruch 67 *<br>----- | 1-15 | INV.<br>C08G64/34 |
| A | WO 2011/089120 A1 (BAYER MATERIALSCIENCE AG [DE]; GUERTLER CHRISTOPH [DE]; GRASSER STEFAN) 28. Juli 2011 (2011-07-28)<br>* Beispiel 1 *<br>----- | 1-15 | |
| A,D | WO 03/029325 A1 (BASF AG [DE]; HEINEMANN JOHANNES [DE]; LUINSTRA GERRIT [DE]; BOHRES ED) 10. April 2003 (2003-04-10)<br>* Seite 23, Zeile 33 - Seite 24, Zeile 2 *<br>----- | 1-15 | |
| A,D | EP 0 222 453 A2 (SHELL INT RESEARCH [NL]) 20. Mai 1987 (1987-05-20)<br>* Beispiele 1-7 *<br>----- | 1-15 | |
| | | | RECHERCHIERTE SACHGEBIETE (IPC) |
| | | | C08G |

Der vorliegende Recherchenbericht wurde für alle Patentansprüche erstellt

2

| Recherchenort | Abschlußdatum der Recherche | Prüfer |
|---|---|---|
| Den Haag | 4. Februar 2013 | Schlicke, Benedikt |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 12 18 1907

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-02-2013

| Im Recherchenbericht angeführtes Patentdokument | Datum der Veröffentlichung | Mitglied(er) der Patentfamilie | Datum der Veröffentlichung |
|---|---|---|---|
| US 2011230580 A1 | 22-09-2011 | CA 2736482 A1 | 11-03-2010 |
| | | CN 102149746 A | 10-08-2011 |
| | | EP 2337809 A1 | 29-06-2011 |
| | | JP 2012502143 A | 26-01-2012 |
| | | KR 20120034813 A | 12-04-2012 |
| | | US 2011230580 A1 | 22-09-2011 |
| | | WO 2010028362 A1 | 11-03-2010 |
| WO 2011089120 A1 | 28-07-2011 | EP 2526139 A1 | 28-11-2012 |
| | | SG 182437 A1 | 30-08-2012 |
| | | US 2012289732 A1 | 15-11-2012 |
| | | WO 2011089120 A1 | 28-07-2011 |
| WO 03029325 A1 | 10-04-2003 | DE 10147712 A1 | 17-04-2003 |
| | | WO 03029240 A1 | 10-04-2003 |
| | | WO 03029325 A1 | 10-04-2003 |
| EP 0222453 A2 | 20-05-1987 | CA 1262597 A1 | 31-10-1989 |
| | | DE 3687881 D1 | 08-04-1993 |
| | | DE 3687881 T2 | 17-06-1993 |
| | | EP 0222453 A2 | 20-05-1987 |
| | | ES 2053436 T3 | 01-08-1994 |
| | | JP 7076264 B | 16-08-1995 |
| | | JP 62115024 A | 26-05-1987 |
| | | US 4826887 A | 02-05-1989 |
| | | US 4826952 A | 02-05-1989 |
| | | US 4826953 A | 02-05-1989 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 0222453 A
- WO 2003029325 A
- WO 2008092767 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 0180994 A1

### In der Beschreibung aufgeführte Nicht-Patentliteratur

- **INOUE et al.** Copolymerization of Carbon Dioxide and Epoxide with Organometallic Compounds. *Die Makromolekulare Chemie,* 1969, vol. 130, 210-220